# DEMANDE DE BREVET EUROPEEN

(11) **EP 4 835 223 A1**
(43) Date de publication de la demande: **04.11.2026**
(21) Numéro de dépôt: 26173836.3
(22) Date de dépôt: 21.04.2026
(51) Int. Cl.: E04F 13/08

(54) **APPUI INTERMÉDIAIRE**

(30) Priorité: 28.04.2025 FR 2504482
(71) Demandeur: A. Raymond et Cie, 38000 Grenoble (FR)
(72) Inventeur: LENGAIGNE, Alban, 38000 Grenoble (FR)
(74) Mandataire: Santarelli

(57) **Abrégé**

La présente invention propose un appui intermédiaire réglable (100), comprenant une embase (20) et un clip (40), l'embase (20) ayant une surface de contact et étant pourvue des moyens de fixations (24) et d'un trou taraudé (26), le trou taraudé (26) s'ouvrant au niveau de la surface de contact, le clip (40) comprenant une tête de clip (44) et une tige filetée (46), la tige filetée (46) étant apte à s'insérer dans le trou taraudé (26), la tête de clip (44) étant destinée à coopérer avec une fourrure.

## Description

### Domaine technique de l'invention

La présente invention se rapporte à un appui intermédiaire, notamment un appui de contre-cloison intermédiaire réglable destiné à la mise en place d'un revêtement intérieur ou extérieur tel qu'un isolant sur un mur

### Technique antérieure

Les systèmes d'appuis intermédiaires de plaque murale connus présentent plusieurs limitations, notamment en ce qui concerne leur adaptabilité à différentes épaisseurs d'isolant. Ces systèmes comprennent généralement :
- une tige filetée avec deux extrémités
- un premier cavalier à une extrémité pour la fixation au mur
- un deuxième cavalier à l'autre extrémité pour supporter la fourrure
- un mécanisme de réglage sur le deuxième cavalier.

Le principal inconvénient de ces systèmes tient à leur manque de souplesse pour absorber les variations d'épaisseur de l'isolant. Pour les adapter à un isolant plus épais ou plus mince, il est souvent nécessaire de sectionner la tige filetée, ce qui alourdit l'installation et limite la possibilité de réutiliser le dispositif. Cette contrainte se traduit par des ajustements plus laborieux sur le chantier, un allongement du temps de pose et un risque de dégradation de la performance isolante. Par ailleurs, l'installation du premier cavalier requiert la pose préalable d'une première ossature fixée au support mural, tandis que le deuxième cavalier doit être placé sur une deuxième ossature.

### Exposé de l'invention

La présente invention vise à résoudre ce problème en proposant un appui intermédiaire réglable qui s'adapte facilement à diverses épaisseurs d'isolant sans nécessiter de modification de la tige. Cette solution permet une plus grande polyvalence d'utilisation, une installation plus rapide et une meilleure performance globale du système d'isolation.

Selon un premier aspect de la présent invention, l'appui intermédiaire réglable, comprenant une embase et un clip, l'embase ayant une surface de contact et étant pourvue des moyens de fixation permettant de fixer l'embase à un support et d'un trou taraudé, le trou taraudé s'ouvrant au niveau de la surface de contact, le clip comprenant une tête de clip et une tige filetée, la tige filetée étant apte à s'insérer dans le trou taraudé par vissage, la tête de clip étant destinée à coopérer avec une fourrure.

Dans un mode de réalisation, les moyens de fixation se présente sous forme d'un trou s'ouvrant au niveau de la surface de contact.

Dans un mode de réalisation, le clip est muni d'une bride disposée entre la tête de clip et la tige.

Dans un mode de réalisation, la surface de contact est sensiblement plane.

Dans un mode de réalisation, la bride et la tête de clip délimitent un espace apte à recevoir les rabats latéraux intérieurs d'une fourrure.

Dans un mode de réalisation, l'alésage constituant le trou taraudé s'étend en saillie depuis de la surface de contact.

Dans un mode de réalisation, l'embase présente une forme sensiblement rectangulaire.

Dans un mode de réalisation, le clip est réalisé d'un seul tenant.

Dans un mode de réalisation, l'appui intermédiaire est réalisé en matière plastique.

Selon un autre aspect de l'invention, un procédé de de mise en place d'un appui intermédiaire réglable selon la présente invention comporte les étapes suivantes :
- fixer l'embase sur un support mural par les moyens de fixation ;
- visser le clip fileté dans le trou taraudé de l'embase, également à travers l'isolant rigide ;
- clipser une fourrure sur la tête de clip.

Dans un mode de réalisation, l'étape de fixation de l'embase est réalisée à l'aide d'une cheville, par les moyens de fixation sous forme d'un trou, en traversant un isolant rigide.

Dans un mode de réalisation, le procédé de de mise en place d'un appui intermédiaire réglable comprend en outre l'étape suivante :
- régler le vissage de la tige filetée dans l'isolant rigide, ceci permet le réglage de l'espacement entre l'isolant et la tête de clip.

### Brève description des figures

D'autres avantages, buts et caractéristiques de la présente invention ressortent de la description qui suit faite, dans un but explicatif et nullement limitatif, en regard des dessins annexés, dans lesquels :
La Figure 1 représente une vue en perspective d'un appui intermédiaire réglable comportant une embase et un clip selon la présente invention ;
La Figure 2A représente une vue en perspective une embase d'un appui intermédiaire selon la présente invention ;
La Figure 2B représente une vue en perspective un clip fileté d'un appui intermédiaire réglable selon la présente invention ;
La Figure 2C représente une vue de côté une embase d'un appui intermédiaire selon la présente invention ;
La Figure 2D représente une vue de côté un clip fileté d'un appui intermédiaire réglable selon la présente invention ;
La Figure 3 représente une vue en coupe d'un appui intermédiaire réglable comportant une embase et un clip selon la présente invention ;
La Figure 4A représente une vue en perspective d'une fourrure montée sur un isolant rigide et un support mural à l'aide d'un appui intermédiaire réglable selon la présente invention ;
La Figure 4B représente une vue en détail de la zone A de la Figure 4A ;
La Figure 4C représente une vue en coupe de l'ensemble de la Figure 4A ;
La Figure 5A représente une vue en perspective d'une fourrure montée sur un isolant rigide, un second isolant et un support mural à l'aide d'un appui intermédiaire réglable selon la présente invention ;
La Figure 5B représente une vue en coupe de l'ensemble de la Figure 5A ;
La Figure 6A représente une vue en perspective d'une fourrure montée sur un support mural extérieur sans isolant à l'aide d'un appui intermédiaire réglable selon la présente invention ;
La Figure 6B représente une vue en détail de la zone B de la Figure 6A.

### Description détaillée des modes de réalisation

Les différentes figures ainsi que les éléments d'une même figure ne sont pas nécessairement représentées à la même échelle. Sur l'ensemble des figures, les éléments identiques portent la même référence numérique.

La terminologie employée dans la présente description ne doit en aucun cas être interprétée de manière limitative ou restrictive, simplement parce qu'elle est employée en conjonction avec une description détaillée de certains modes de réalisation de l'invention.

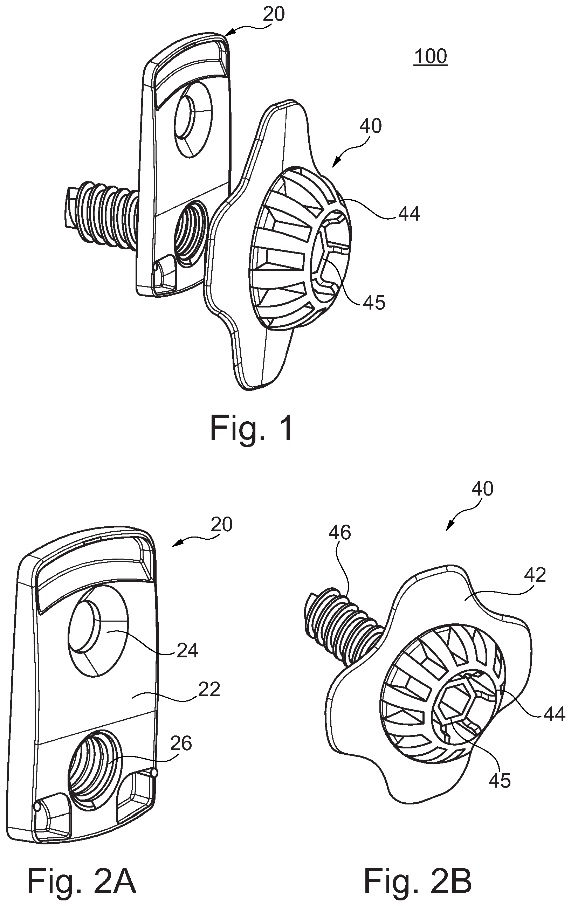

La Figure 1 illustre une vue en perspective d'un appui intermédiaire réglable 100 selon la présente invention. Comme on peut l'observer, cet appui comprend deux éléments principaux : une embase 20 et un clip de fourrure 40.

L'appui intermédiaire réglable 100 selon l'invention peut être fabriqué par moulage de matière plastique connue, par exemple par injection thermoplastique, plus particulièrement en plastiques techniques tels que des polyamides, des résines d'acétal, des polyesters thermoplastiques. De préférence, l'appui intermédiaire réglable 100 est de matériaux connus permettant de résister au vieillissement et à la température.

Dans une application classique d'isolation intérieure, on utilise une fourrure, c'est-à-dire un profilé en « C » muni de petits retours latéraux intérieurs (ou ailettes), servant de support à des plaques de parement, telles que des plaques de plâtre. Ces fourrures sont généralement en métal.

La plaque murale est généralement rectangulaire, mais peut également adopter d'autres formes, comme le carré ou l'hexagone. Elle peut être fabriquée en divers matériaux tels que le plâtre, le ciment, le polystyrène, le bois, ou tout autre matériau approprié.

Les matériaux isolants utilisés peuvent inclure le polystyrène expansé, le polyuréthane expansé, les laines minérales, la laine de roche, la laine de verre, la perlite expansée, la laine de bois, le liège expansé ou les fibres de bois. Pour un isolant rigide, le polyuréthane expansé est une option courante.

L'appui intermédiaire réglable peut avantageusement être fabriqué en matériau composite, tel que le plastique, afin de limiter les ponts thermiques entre le support mural et la fourrure.

De manière générale, l'appui intermédiaire réglable 100 comporte une embase 20 et un clip 40, l'embase ayant une surface de contact et étant pourvue des moyens de fixation permettant de fixer l'embase à un support et d'un trou taraudé, le trou taraudé s'ouvrant au niveau de la surface de contact, le clip comprenant une tête de clip et une tige filetée, la tige filetée étant apte à s'insérer dans le trou taraudé par vissage, la tête de clip étant destinée à coopérer avec une fourrure.

Il convient de noter que l'embase peut être fixée à un support mural, soit directement, soit indirectement par l'intermédiaire d'un isolant, au moyen de tout dispositif de fixation approprié, tel que, par exemple :
- vissage
- entretoisement (avec cheville à frapper)
- collage
- magnétisme :
   - présence d'aimant dans l'embase, et présence d'une plaque métallique fixée sur l'isolant
- encapsulage :
   - présence d'une boîte sur l'isolant dans laquelle vient se glisser l'embase
- clipsage :
   - clipsage sur une tige filetée (par exemple de type quickie)
   - embase en 2 pièces qui viennent se clipser latéralement sur un élément fixé dans le support mural
   - clipsage latéral de l'embase sur un élément fixé dans le support mural

Dans le mode de réalisation illustré, les moyens de fixation se présentent sous forme d'un trou 24. La fixation l'appui intermédiaire au support mural se fait alors par entretoisement avec cheville à frapper dans ce mode de réalisation.

Dans les figures accompagnant la présente demande, les moyens de fixation sont illustrés avec un trou 24 s'ouvrant au niveau de la surface de contact. Toutefois, l'homme du métier comprendra qu'il est possible de réaliser cette fixation au moyen de tout dispositif approprié, tel que décrit précédemment. Il en va de même pour le procédé de mise en place d'un appui intermédiaire réglable selon la présente invention.

La Figure 2A représente une vue en perspective d'une embase 20 d'un appui intermédiaire selon la présente invention. L'embase 20 comprend un corps 22 de forme généralement rectangulaire.

Le corps 22 présente deux ouvertures distinctes : les moyens de fixation sous forme d'un trou 24 circulaire situé dans la partie supérieure, destiné à recevoir un élément de fixation pour l'ancrage au support mural, et un trou taraudé 26 positionné dans la partie inférieure pour l'engagement avec le clip de fourrure 40.

L'embase 20 comporte une surface de contact destinée à entrer en contact avec un isolant rigide ou un support mural. Les deux trous 24, 26 s'ouvrent s'ouvrant au niveau de la surface de contact.

Optionnellement, la surface de contact est avantageusement plane, ceci sera détaillé plus tard.

Avantageusement, l'embase intègre des renforts structurels et des transitions entre les différentes sections de l'embase.

Avantageusement, le clip de fourrure 40 est préférablement réalisé en une seule pièce.

La Figure 2B illustre une vue en perspective d'un clip de fourrure 40. Ce clip comprend une tige filetée 46 et une tête de clip 44 en forme de champignon à une extrémité du clip. La tête de clip est avantageusement adaptée pour permettre le clippage direct d'une fourrure. La tige filetée 46 s'étend depuis la tête de clip 44. Cette tige filetée 46 est avantageusement adaptée pour s'engager dans le trou taraudé 26 de l'embase 20, permettant avantageusement ainsi un réglage de la distance entre la tête de clip 44 et l'embase 20.

Dans un mode de réalisation, la tête de clip 44 comporte une plaque circulaire avec une surface présentant une empreinte 45, ceci permet de recevoir un outil pour le vissage et dévissage du clip.

Dans un mode de réalisation, le clip comprend avantageusement une bride 42 entre la tige filetée 46 et la tête de clip 44. Une fente 43 peut être présente entre la bride 42 et la tête de clip 44. La fente 43 est avantageusement adaptée pour recevoir les petits retours latéraux intérieurs, une fois la fourrure est clipsé sur la tête de clip 44.

Optionnellement, la bride 42 adopte une configuration ergonomique qui facilite la prise en main et, par conséquent, le vissage ou le dévissage du clip de fourrure 40.

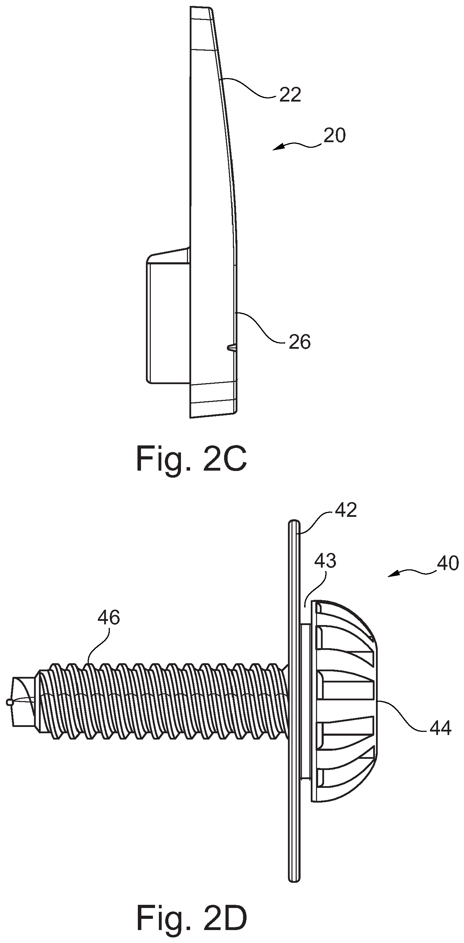

La Figure 2C montre une vue de côté de l'embase 20.

Dans un mode de réalisation optionnel, la surface de contact de l'embase est sensiblement plane, ce qui améliore l'adhérence entre l'embase et l'isolant sur lequel elle repose.

Dans un autre mode de réalisation optionnel, l'alésage constituant le trou taraudé 26 s'étend en saillie depuis la surface de contact, formant une protubérance. Cette configuration permet une meilleure prise et un engagement plus profond avec la tige filetée 46 du clip de fourrure 40.

La Figure 2D illustre, en vue de côté orthogonale, le clip de fourrure 40. On voit la tige filetée 46, disposée horizontalement, ainsi que la tête de clip 44, en forme de champignon, située à l'une de ses extrémités. La tige filetée 46 présente des filets hélicoïdaux sur toute sa longueur, tandis que la tête de clip 44 adopte une structure bombée à surfaces courbes, assurant un clippage sûr. Une bride 42 se situe entre la tête de clip 44 à la tige filetée 46.

Grâce à cette configuration, la position du clip de fourrure 40 par rapport à l'embase 20 peut être ajustée avec précision, offrant une grande souplesse d'installation tant pour des revêtements intérieurs qu'extérieurs, et ce, sur divers types de supports muraux, avec ou sans isolant. En fait, le réglage du clip de fourrure 40 permet de reprendre des défauts d'aplomb du mur, et/ou e venir mettre un isolant supplémentaire entre le premier isolant et la fourrure ou un passage de câbles entre le premier isolant et la fourrure. Le réglage peut aussi être effectué après le clipsage de la fourrure 200.

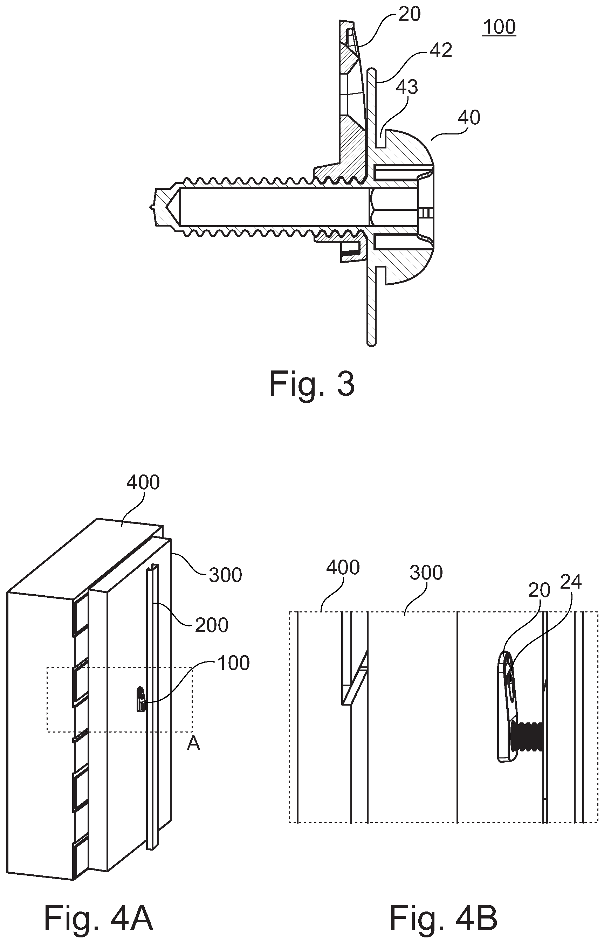

La Figure 3 présente, en coupe, l'appui intermédiaire réglable 100 selon la présente invention, en mettant en évidence la disposition et l'interaction entre l'embase 20 et le clip de fourrure 40.

Un élément particulièrement remarquable réside dans l'espace 43 défini entre la bride 42 et la tête de clip 44. La bride 42 s'étend latéralement à partir de la tige filetée 46, tandis que la tête 44, de forme champignon, se trouve au-dessus.

Cet espace est spécifiquement prévu pour accueillir et retenir les bords d'une fourrure, permettant ainsi un clippage à la fois direct et sécurisé sur l'appui intermédiaire. Ses dimensions sont adaptées de manière à assurer une prise fiable tout en autorisant une mise en place ou un retrait sans difficulté.

Par ailleurs, la fente 43 confère une certaine flexibilité lors de l'installation, en tolérant de légères variations dimensionnelles des fourrures. Cette capacité d'adaptation, associée au réglage de la tige filetée 46, permet une installation rapide et efficace, tout en maintenant la polyvalence offerte par l'appui intermédiaire réglable 100.

La Figure 4A montre, en perspective, la mise en place d'une fourrure 200 sur un isolant rigide 300 et un support mural 400 au moyen d'un appui intermédiaire réglable 100 conforme à la présente invention. Dans cette configuration, l'appui 100 traverse l'isolant rigide 300 pour s'ancrer directement au mur 400, ce qui permet de conserver l'efficacité thermique de l'isolant tout en assurant un montage fiable. L'embase 20, solidement fixée au mur à l'aide d'une cheville 500, fournit une assise stable, tandis que le clip de fourrure 40, muni d'une tige filetée 46, se visse dans l'embase 20 à travers l'isolant 300. L'emboîtement direct de la fourrure 200 sur la tête de clip 44 assure un maintien robuste sans nécessiter d'outil supplémentaire et autorise un réglage précis de la distance entre la fourrure et le mur, créant ainsi un espace technique idéal pour le passage de câbles ou l'installation de gaines. De surcroît, la longueur ajustable de la tige filetée 46 permet d'adapter l'appui à diverses épaisseurs d'isolant.

La Figure 4B agrandit la zone A de la Figure 4A et illustre plus en détail l'interface entre l'appui 100, l'isolant 300 et la fourrure 200. On y distingue la tête de clip 44, prévue pour s'emboîter dans la fourrure 200, ainsi que l'espace formé entre la bride (42 et la tête, garantissant la stabilité de l'assemblage tout en préservant la simplicité de mise en œuvre.

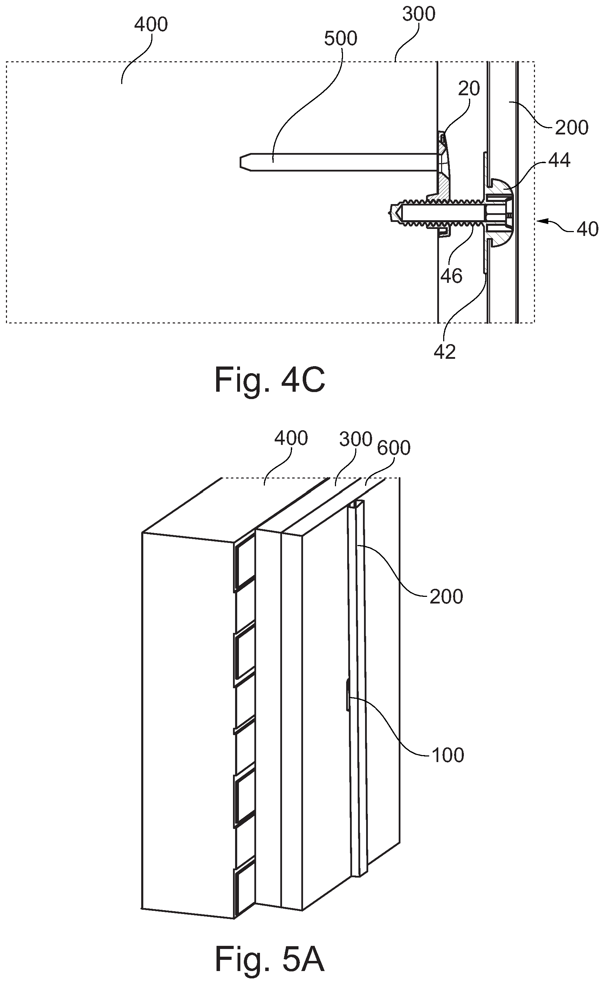

La Figure 4C propose une vue en coupe de l'ensemble, révélant notamment la profondeur de pénétration de la cheville 500 dans le mur et la manière dont la tige filetée 46 s'ajuste dans l'embase 20. Cette disposition offre également un soutien complémentaire par l'enfoncement partiel de la partie filetée 46 dans l'isolant 300. Grâce à ce système, l'isolation intérieure est aisément installée, la fourrure 200 restant solidement maintenue tout en étant réglable, ce qui facilite la pose ultérieure du parement et garantit une finition de qualité.

La Figure 5A illustre, en perspective, la manière dont un appui intermédiaire réglable 100 peut traverser simultanément un isolant rigide 300 et un second isolant 600 - par exemple un isolant fibreux - pour se fixer directement sur un support mural 400. Dans cette configuration, l'embase 20 est ancrée au mur à l'aide d'une cheville 500 ou d'un dispositif similaire, tandis que la tige filetée 46 du clip de fourrure 40 s'engage dans l'embase 20 en passant à travers les deux couches d'isolant. Ainsi, malgré la superposition de différents matériaux isolants, leurs propriétés thermiques et phoniques sont préservées, tandis que la fourrure 200 demeure solidement fixée à une distance réglable du mur. Cette disposition démontre aussi la robustesse de la fixation, même lorsque l'épaisseur cumulée des isolants est importante.

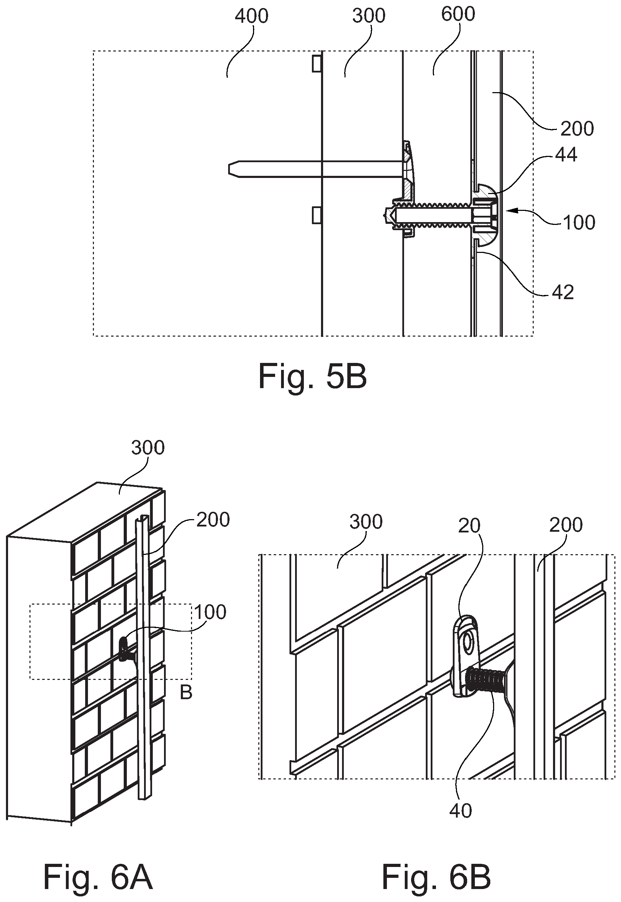

La Figure 5B présente une vue en coupe de l'ensemble décrit en Figure 5A, révélant la profondeur de pénétration de la cheville 500 dans le mur et la position de la tige filetée 46 à l'intérieur de l'embase 20. On observe clairement le maintien de la fourrure 200 à une distance précise du mur, grâce au vissage du clip 40. Cet espace libre, situé entre l'isolant fibreux 600 et le futur parement, par exemple le placoplâtre non représenté, peut servir de passage technique, simplifiant l'installation de câbles ou d'autres équipements. Par ailleurs, la longueur ajustable de la tige filetée 46 permet d'adapter l'appui intermédiaire à diverses épaisseurs ou combinaisons d'isolants, tout en assurant une mise en place simple et efficace des éléments de finition.

La Figure 6A illustre, en perspective, la mise en place d'une fourrure 200 sur un support mural extérieur 400 dépourvu d'isolant, à l'aide d'un appui intermédiaire réglable 100 conforme à la présente invention. Dans ce mode de réalisation, l'embase 20 est solidement ancrée au mur extérieur à l'aide d'une cheville 500 adaptée à un usage en extérieur, tandis que le clip de fourrure 40, pourvu d'une tige filetée 46, s'insère dans le trou taraudé 26 de l'embase 20. Cette configuration s'avère particulièrement utile lorsqu'aucune isolation n'est requise ou lorsque l'isolation est mise en œuvre selon un procédé différent, tout en permettant de régler précisément l'écart entre la fourrure 200 et le mur pour compenser d'éventuelles irrégularités de surface, par exemple reprendre des défauts d'aplomb du mur. Grâce à ce réglage, on peut également créer un espace ventilé entre la paroi et le futur revêtement extérieur (non représenté), favorisant la circulation d'air et la durabilité du bardage.

La Figure 6B offre une vue détaillée de la zone B, mettant en évidence l'interface entre l'appui 100 et la fourrure 200. Dans cette vue détaillée, on distingue clairement comment la tête de clip 44 s'insère dans la fourrure 200. L'espace situé entre la bride 42 et la tête 44 maintient fermement les bords de la fourrure, ce qui se révèle crucial dans un contexte extérieur exposé aux contraintes climatiques et aux charges de vent. Par ailleurs, la conception robuste de l'appui 100 autorise l'utilisation de divers types de revêtements, tels que du bardage métallique ou en bois, tout en conservant une mise en place facile et adaptable. L'ensemble de cette configuration, illustrée aux Fig. 6A et Fig. 6B, démontre ainsi la souplesse et la solidité du système, qui fournit une solution efficace pour le montage de revêtements extérieurs sur différents supports muraux, même sans couche isolante.

Pour la mise en place d'un appui intermédiaire réglable 100 conforme à la présente invention, un procédé d'installation est également proposé.

En pratique, le procédé d'installation d'un appui intermédiaire réglable 100 selon la présente invention prévoit, tout d'abord, la fixation de l'embase 20. Pour ce faire, on fore un trou à travers l'isolant rigide 300 jusqu'au support mural 400, puis on positionne l'embase 20 contre l'isolant 300. Une cheville 500 est alors insérée à travers les moyens de fixation sous forme d'un trou 24 de l'embase 20 et ancrée dans le mur 400, en traversant l'isolant 300.

Une étape d'installation du clip fileté 40 suit. On aligne la tige filetée 46 de ce clip avec le trou taraudé 26 de l'embase 20, puis on la visse afin de régler la distance entre la tête de clip 44 et la surface de l'isolant rigide 300. Ce réglage permet de reprendre des défauts d'aplomb du mur, et/ou e venir mettre un isolant supplémentaire entre le premier isolant et la fourrure ou un passage de câbles entre le premier isolant et la fourrure. Le réglage peut aussi être effectué après le clipsage de la fourrure 200.Une fois cette distance jugée satisfaisante, on clipse la fourrure 200. Il suffit de placer la fourrure 200 de manière à l'emboîter dans l'intervalle compris entre la bride 42 et la tête 44, puis d'exercer une pression ferme pour la verrouiller. Avantageusement, la tête de clipsage 44, qui s'insère en force dans la fourrure, peut ensuite y coulisser librement, permettant ainsi un ajustement précis de sa position à l'intérieur de cette dernière.

Dans un mode de réalisation optionnel, le procédé comporte, en plus, une étape de réglage de la tige filetée 46 dans l'isolant rigide 300. Ce réglage peut s'effectuer avant que la fourrure 200 ne soit clippée sur la tête de clip 44, ou bien après son clippage, afin d'ajuster avec précision la position de la fourrure 200 par rapport au mur. Dans les deux cas, cette possibilité de réglage offre une grande polyvalence lors de la mise en œuvre, s'adaptant à différentes épaisseurs d'isolant et garantissant un maintien stable du système.

Une fois que les appuis intermédiaires réglables et les fourrures sont solidement positionnés et réglés, il est alors possible de procéder à la mise en place des plaques murales qu'il s'agisse de plaques de plâtre, de panneaux en bois, ou d'un autre matériau adapté. Celles-ci viennent se fixer directement sur les fourrures, formant ainsi une paroi régulière et homogène. Grâce à l'espace créé entre le mur et les plaques, il est également possible de dissimuler des câbles ou des gaines techniques. De plus, ce montage modulaire facilite ultérieurement toute opération de maintenance ou de rénovation.

| **Signe de référence** | **Désignation** |
|---|---|
| 100 | Appui intermédiaire réglable |
| 20 | Embase |
| 22 | Corps |
| 24 | Trou |
| 26 | Trou taraudé |
| 40 | Clip de fourrure |
| 42 | Bride |
| 43 | Fente |
| 44 | Tête de clip |
| 45 | Empreinte |
| 46 | Tige filetée |
| 200 | Fourrure |
| 300 | Isolant rigide |
| 400 | Support (mural) |
| 500 | Cheville |
| 600 | Isolant |

## Revendications

1. Appui intermédiaire réglable (100), comprenant une embase (20) et un clip (40), l'embase (20) ayant une surface de contact et étant pourvue des moyens de fixation (24) permettant de fixer l'embase (20) à un support et d'un trou taraudé (26), le trou taraudé (26) s'ouvrant au niveau de la surface de contact, le clip (40) comprenant une tête de clip (44) et une tige filetée (46), la tige filetée (46) étant apte à s'insérer dans le trou taraudé (26) par vissage, la tête de clip (44) étant destinée à coopérer avec une fourrure.

2. Appui intermédiaire réglable (100) selon la revendication 1, **caractérisé en ce que** les moyens de fixation (24) sont un trou s'ouvrant au niveau de la surface de contact.

3. Appui intermédiaire réglable (100) selon la revendication 1, **caractérisé en ce que** le clip (40) est muni d'une bride (42) disposée entre la tête de clip (44) et la tige (46).

4. Appui intermédiaire réglable (100) selon l'une des revendications précédentes, **caractérisé en ce que** la surface de contact est sensiblement plane.

5. Appui intermédiaire réglable (100) selon l'une des revendications précédentes, **caractérisé en ce que** la bride (42) et la tête de clip (44) délimitent un espace apte à recevoir les rabats latéraux intérieurs d'une fourrure.

6. Appui intermédiaire réglable (100) selon l'une des revendications précédentes, **caractérisé en ce que** l'alésage constituant le trou taraudé (26) s'étend en saillie depuis de la surface de contact.

7. Appui intermédiaire réglable (100) selon l'une des revendications précédentes, dans lequel le clip (40) est réalisé d'un seul tenant.

8. Appui intermédiaire réglable (100) selon l'une des revendications précédentes, **caractérisé en ce qu'**il est réalisé en matière plastique.

9. Procédé de mise en place d'un appui intermédiaire réglable (100) selon l'une des revendications précédentes, comprenant les étapes suivantes :
- fixer l'embase (20) sur un support mural (400) par les moyens de fixation (24)
- visser le clip fileté (40) dans le trou taraudé (26) de l'embase (20), également à travers l'isolant rigide (300) ;
- clipser une fourrure sur la tête de clip (44).

10. Procédé de mise en place d'un appui intermédiaire réglable (100) selon la revendication 9, dans lequel, l'étape de fixation de l'embase (20) est réalisée à l'aide d'une cheville (500), par les moyens de fixation (24) sous forme d'un trou (24), en traversant un isolant rigide (300).

11. Procédé de mise en place d'un appui intermédiaire réglable (100) selon la revendication 10, **caractérisé en ce qu'**il comprend l'étape suivante :
- régler le vissage de la tige filetée (46) dans l'isolant rigide (300), permettant le réglage de l'espacement entre l'isolant (300) et la tête de clip (44).
